# EUROPEAN PATENT APPLICATION

(11) **EP 2 222 126 A1**
(43) Date of publication of application: **25.08.2010**
(21) Application number: 09290128.9
(22) Date of filing: 19.02.2009
(51) Int. Cl.: H04W 72/08, H04W 92/20

(54) **Adjusting load of base station based on overload indication received from neighbour base station**

(71) Applicant: Alcatel Lucent, 75008 Paris (FR)
(72) Inventor: Schreiber, Gerhard, 70825 Korntal-Münchingen (DE); Dötsch, Uwe, 74392 Freudental (DE)
(74) Representative: Kohler Schmid Möbus

(57) **Abstract**

The present invention relates to a system and method for performing load control in at least one cell of interest (CI) of a cellular communication system. In this cellular communication system overload indicators (OI) are communicated by at least one neighbor cell (CN) to the cell of interest (CI) and used to adapt the load utilization in the cell of interest (CI). Therefore the cell of interest (CI) calculates a probability of being guilty for overload situations in the at least one neighbor cell (CN). To accomplish this, calculating means (20) include first and second counting means (21, 22) for counting a total number of received overload indicator und summing up the values (S) of the overload indicators within a predetermined overload indicator collection interval (T_{OI}). Decision means (30) employ probability threshold values (LIT and LDT) each for load increase and for load decrease for deciding whether the cell of interest (CI) shall increase, hold or decrease its load usage.

## Description

### Field of the Invention

The present invention relates to a load control algorithm and in particular to a system and method for performing load control, e.g. by allocating of radio resources, in cells of a cellular communication system as well as a base station and a cellular radio network using said load control system.

### Description of Related Art

In mobile communications systems with frequency re-use, like WiMAX or LTE; inter-cell interference may appear depending on the resource allocation. However, inter-cell interference reduces the cell performance and thus a kind of interference coordination is required in order to reduce the overall performance deterioration due to inter-cell interference.

### Summary of the Invention

In view of the above the object of the present invention is to provide a system and a method for performing load control in cellular communication systems which can reduce inter-cell interference and thus reduce the overall performance deterioration due to the inter-cell interference.

According to an important aspect the invention provides a system for performing load control in at least one cell of interest of a cellular communication system, said system comprising receiving means associated to said cell of interest and adapted for receiving at least one overload indicator communicated by at least one neighbor cell to said cell of interest; calculating means associated to said cell of interest and adapted to calculate based on said received at least one overload indicator a probability that said cell of interest is guilty for an overload situation in said at least one neighbor cell, and decision means associated to said cell of interest and employing thresholds for said probability each for load increase and for load decrease for deciding whether the cell of interest shall increase, hold or decrease its load usage.

According to the above important aspect of the invention a prerequisite for optimum operation of the load control e.g. by allocation of radio resources is that the cell of interest regularly receives overload indicators from all of its (e.g. geometric) neighbor cells.

In more and advantageous details the present cell of interest receives the at least one overload indicator communicated by the at least one neighbor cell during a predetermined overload indicator collection interval. The value of the overload indicator OI may be derived form any quantity that reflects the load situation in a cell. A commonly employed quantity is the so called interference-to-thermal-noise ratio loT, which is regularly determined in each cell. The OI shall be equal to 1 if the loT is larger than a predefined value, otherwise the OI shall be 0. The exact algorithm to determine the overload indicator OI may depend on the type of equipment used which depends on the operator of the communications system.

For determining the probability (the guilty probability) that the cell of interest is guilty for an overload situation the cell of interest maintains two counters, namely first counting means adapted for summing-up the total number of overload indicators received during said overload indicator collection interval and second counting means for accumulating values of the overload indicators during the overload indicator collection interval. The counting means are initialized, e.g. are set to zero at the beginning of an overload indicator collection interval and at the end of the overload indicator collection interval a value representing the guilty probability that the cell of interest is responsible for overload situation in the at least one neighbor cell is calculated based on the total number of overload indicators counted by the first counting means and the accumulated values of the overload indicators counted by the second counting means.

The algorithm to calculate the guilty probability of the cell of interest is to determine the ratio between the sum accumulated by the second counting means and the total number of overload indicators summed up by the first counting means during the last collection interval

Depending on the guilty probability value the cell of interest may increase, hold or decrease the own load. Two threshold values are introduced to accomplish this function:
A load increase threshold which is smaller than 1,0 and equal to or larger than 0,0 and a load decrease threshold which is larger than the load increase threshold and equal to or smaller than 1,0.

The cell of interest is allowed to increase its own load if the guilty probability is smaller than the load increase threshold value. On the other hand the cell shall reduce its own load in case the guilty probability becomes larger than the load decrease threshold value.

A load increase or decrease in a mobile communication system can be achieved for example by:
- adapting the maximum transmit power of mobiles in uplink or base stations in downlink;
- adjustment of the target signal to interference plus noise ratios (SINRs);
- limitation of the transmit power spectral density;
- limitation of radio resources in time, frequency and space.

The present invention further provides a base station of a cellular communication system wherein the base station employs the system according to the present invention.

Further the present invention provides a cellular radio network which employs the present load control system.

Advantages of the present system and method are for example that - the system performance, i.e. the cell edge throughput can be improved and that the present load control system and the method can simply be implemented in present product lines, e.g. LTE or WiMAX.

### Brief Description of the Drawings

An exemplary embodiment of the present system and method will be described in detail with reference to the following figures, wherein:
- Fig. 1: schematically shows an exemplary embodiment of a cellular communication system comprising for example two neighbor cells, wherein functional blocks are depicting the present system for load control in the cell of interest, and
- Fig. 2: schematically depicts a time-diagram with predetermined overload indicator collection intervals, overload indicators sent from the neighbor cell within the overload collection interval and counted values of the first and second counting means.

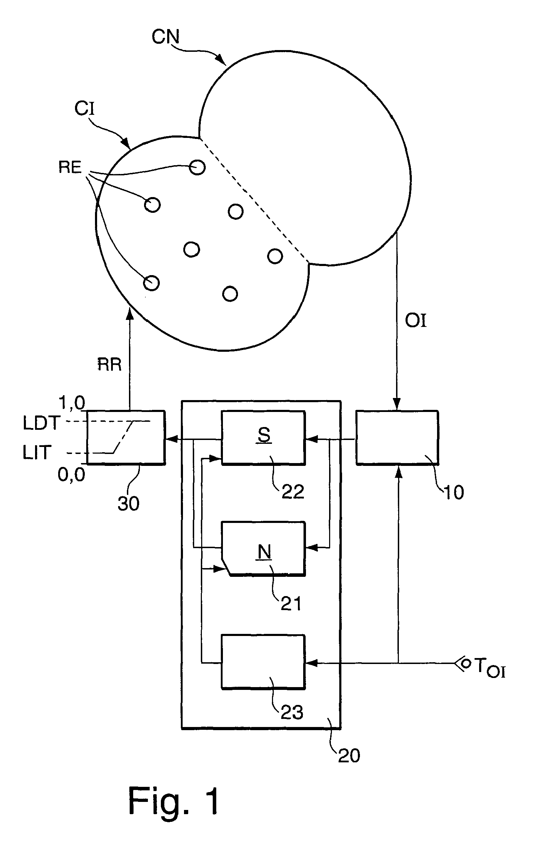

The exemplary embodiment of the present load control system and method according to Fig. 1 depicts as an example one cell of interest CI having a plurality of radio equipments RE, for example mobile / subscriber stations, and being adjacent to a neighbor cell CN.

The system of the present invention comprises receiving means 10 configured to receive at least one overload indicator OI communicated by the neighbor cell CN to the cell of interest CI, calculating means 20 configured to calculate based on the received overload indicator OI a guilty probability that the cell of interest is guilty for an overload situation in the neighbor cell CN and decision means 30 configured to decide whether the cell of interest CI shall increase, hold or decrease its load usage, e.g. by allocating more, the same number, or less radio resources RR to the radio equipments RE of the cell of interest CI.

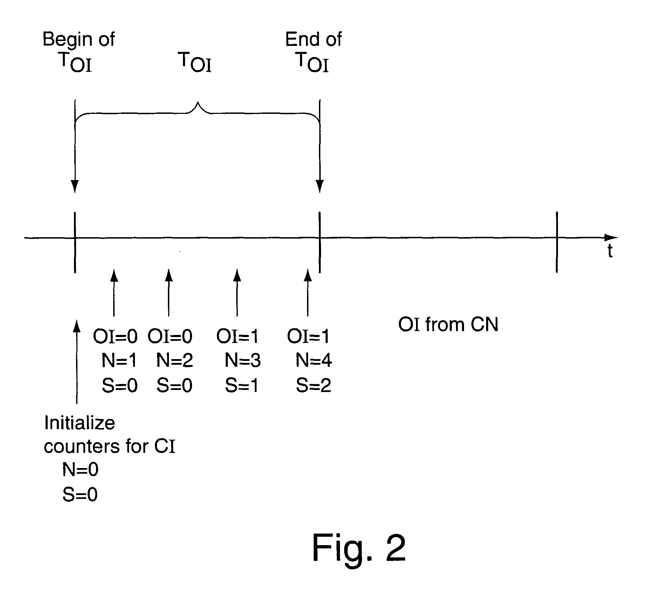

Fig. 1 further shows that the overload indicator OI received from the neighbor cell CN is collected during a predetermined overload indicator collection interval T_{OI} and that the calculating means comprises first counting means 21 adapted for summing up a total number N of overload indicator(s) OI received by the receiving means 10 during the overload indicator collection interval T_{OI}, second counting means 22 adapted for accumulating values S of the overload indicator (s) OI during said overload indicator collection interval T_{OI} and initializing means 23 adapted for initializing the first and second counting means 21, 22 at the beginning of each overload indicator collection interval T_{OI} (refer to Fig. 2). At the end of the overload indicator collection interval T_{OI} the calculating means 20 calculates the guilty probability based on the counted values N and S of the first and second counting means 21 and 22.

As further indicated in Fig. 1, the decision means 30 employs two threshold values, a load increase threshold LIT (0,0 ≤ LIT < 1,0) and a load decrease threshold LDT ( LDT > LIT ≤ 1,0).

Only for simplification Fig. 1 shows only two neighboring cells of a cellular communication system, namely the cell of interest CI and one neighbor cell CN which for example may be a geometric neighbor cell. For the understanding of the working principle it is sufficient to assume that the overload indicator OI is a one bit information. The interpretation of the overload indicator shall be as follows: OI = 0 → no overload; OI = 1 → overload in the neighbor cell CN communicating this overload indicator OI.

A prerequisite for optimum operation of the present method is that the cell of interest CI regularly receives overload indicators OI from all of its neighbor cells. While Fig. 1 only shows one neighbor cell CN neighboring to the cell of interest CI, it is a matter of course that the cell of interest CI in a general cellular communication system may comprise more than one neighbor cell CN.

Fig. 2 depicts on a time axis t one overload indicator collection interval T_{OI} of a sequence of a plurality of predetermined periodic overload indicator collection intervals T_{OI}. At the beginning of the overload indicator collection interval T_{OI}, the first and the second counting means 21 and 22 depicted in Fig. 1 are initialized, e.g. set to zero (N=0; S= 0). In the example depicted in Fig. 2 the receiving means 10 of the load control system receives from the neighbor cell CN two overload indicators OI having the value equal to zero and two overload indicators OI having the value equal to 1.

At the end of T_{OI} the first counting means 21 counted four overload indicators OI, thus has the counting value N=4 and the second counting means 22 counted two OIs having the value of 1, thus has the counting value 2.

A value representing the guilty probability that the cell of interest CI is responsible for overload situation in the neighbor cell CN is calculated by the calculating means 20 at the end of the overload indicator collection interval T_{OI}.

As an example in the present load control system the real valued guilty probability is given by a ratio between the sum S of the second counting means 22 and the number N of received OIs within the last overload indicator collection interval T_{OI} (guilty probability = S/N).

As already explained, the cell of interest CI is allowed to increase its own load if the guilty probability value is smaller than the load increase threshold value LIT, while on the other hand the cell of interest CI shall reduce its own load in case the guilty probability becomes larger than the load decrease threshold value LDT.

A load increase or a decrease in a mobile cellular communication system can be achieved *inter alia* by:
- adapting the maximum transmit power of mobiles in uplink or base stations in downlink;
- adjustment of the target signal to interference plus noise ratio INRs;
- limitation of the transmit power spectral density;
- limitation of radio resources RR in time, frequency and space.

## Claims

1. A system for performing load control in at least one cell of interest (CI) of a cellular communication system, said system comprising:
- Receiving means (10) associated to said cell of interest (CI) and adapted for receiving at least one overload indicator (OI) communicated by at least one neighbor cell (CN) to said cell of interest (CI);
- Calculating means (20) associated to said cell of interest (CI) and adapted to calculate based on said received at least one overload indicator (OI) a probability that said cell of interest (CI) is guilty for an overload situation in said at least one neighbor cell (CN), and
- Decision means (30) associated to said cell of interest (CI) and employing thresholds (LIT, LDT) for said probability each for load increase and for load decrease for deciding whether the cell of interest (CI) shall increase, hold or decrease its load usage.

2. The system as claimed in claim 1, wherein
- said receiving means (10) is additionally adapted to collect said at least one overload indicator (OI) during a predetermined overload indicator collection interval (T_{OI}), and
- said calculating means (20) further comprises:
- First counting means (21) adapted for summing up a total number ( N ) of overload indicators (OI) received by said receiving means (10) during said overload indicator collection interval (T_{OI});
- Second counting means (22) adapted for accumulating values (S) of the overload indicators (OI) during said overload indicator collection interval (T_{OI}), and
- initializing means (23) adapted for initializing the first and second counting means (21,22) at the beginning of each overload indicator collection interval (T_{OI});
- Said calculating means (20) being further adapted to calculate the guilty probability at the end of said overload indicator collection interval (T_{OI}) based on the counted values (N,S) of said first and second counting means (21,22).

3. The system as claimed in claim 2, wherein said calculating means (20) is further adapted to calculate the guilty probability of the cell of interest (CI) as a ratio between the sum (S) accumulated by the second counting means (22) and the total number (N) of overload indicators (OI) summed up by the first counting means (21) during the last collection interval (T_{OI}).

4. The system as claimed in claim 1, wherein said decision means (30) is employing said load increase threshold (LIT) being smaller than 1,0 and equal to or larger than 0,0 and said load decrease threshold (LDT) being larger than said load increase threshold (LIT) and equal to or smaller than 1,0.

5. The system as claimed in claim 1, wherein the cell of interest (CI) is allowed to increase its own load if the guilty probability is smaller than the load increase threshold (LIT) and to decrease its own load if the guilty probability is larger than the load decrease threshold (LDT).

6. A base station for a cellular communication system, said base station using said system according to one of the preceding claims.

7. A cellular radio network using said system according to one of the claims 1 to 5.

8. A method for performing load control in at least one cell of interest (CI) of a cellular communication system, said method comprising:
- receiving for said cell of interest (CI) at least one overload indicator (OI) communicated by at least one neighbor cell (CN) to said cell of interest (CI);
- calculating based on said received at least one overload indicator (OI) a probability that said cell of interest (CI) is guilty for an overload situation in said at least one neighbor cell (CN), and
- employing thresholds ( LIT,LDT) for said probability each for load increase and for load decrease for deciding whether the cell of interest (CI) shall increase, hold or decrease its load usage.

9. The method as claimed in claim 8, wherein said method further comprises:
- Collecting for said cell of interest (CI) said at least one overload indicator (OI) during a predetermined overload indicator collection interval (T_{OI});
- Summing up for said cell of interest (CI) a total number (N) of overload indicator (OI) during said overload indicator collection interval (T_{OI});
- Accumulating for said cell of interest (CI) values (S) of the overload indicators (OI) during said overload indicator collection interval (T_{OI}), wherein
the guilty probability is calculated at the end of said overload indicator collection interval (TOI) based on the total number (N) and the accumulated value (S) of the overload indicators (OI).

10. The method as claimed in claim 9, wherein the guilty probability of the cell of interest (CI) is calculated as a ratio between the accumulated values (S) and the total number (N) of overload indicators (OI) summed up during the last collection interval (T_{OI})_{'}

11. The method as claimed in claim 8, wherein said load increase threshold (LIT) is smaller than 1,0 and equal to or larger than 0,0 and said load decrease threshold (LDT) is larger than said load increase threshold (LIT) and equal to or smaller than 1,0.

12. The method as claimed in claim 8, wherein the cell of interest (CI) is allowed to increase its own load if the guilty probability is smaller than the load increase threshold (LIT) and to decrease its own load if the guilty probability is larger than the load decrease threshold value (LDT).

13. A computer program product comprising code means for performing the steps of the method as claimed in claim 8.

## Amended claims

### Amended claims in accordance with Rule 137(2) EPC.

**1.** A system for performing load control in at least one cell of interest (CI) of a cellular communication system, said system comprising:
- Receiving means (10) associated to said cell of interest (CI) and adapted for receiving at least one overload indicator (OI) communicated by at least one neighbor cell (CN) to said cell of interest (CI); the overload indicator (OI) being a one bit information derived from a quantity that reflects a load in the neighbor cell (CN),
- Calculating means (20) associated to said cell of interest (CI) and adapted to calculate based on said received at least one overload indicator (OI) a probability that said cell of interest (CI) is guilty for an overload situation in said at least one neighbor cell (CN), and
- Decision means (30) associated to said cell of interest (CI) and employing thresholds (LIT, LDT) for said probability each for load increase and for load decrease for deciding whether the cell of interest (CI) shall increase, hold or decrease its load.

**2.** The system as claimed in claim 1, wherein
- said receiving means (10) is additionally adapted to collect said at least one overload indicator (OI) during a predetermined overload indicator collection interval (T_{OI}), and
- said calculating means (20) further comprises:
- First counting means (21) adapted for summing up a total number ( N ) of overload indicators (OI) received by said receiving means (10) during said overload indicator collection interval (T_{OI});
- Second counting means (22) adapted for accumulating values (S) of the overload indicators (OI) during said overload indicator collection interval (T_{OI}), and
- initializing means (23) adapted for initializing the first and second counting means (21,22) at the beginning of each overload indicator collection interval (T_{OI});
- Said calculating means (20) being further adapted to calculate the guilty probability at the end of said overload indicator collection interval (T_{OI}) based on the counted values (N,S) of said first and second counting means (21,22).

**3.** The system as claimed in claim 2, wherein said calculating means (20) is further adapted to calculate the guilty probability of the cell of interest (CI) as a ratio between the sum (S) accumulated by the second counting means (22) and the total number (N) of overload indicators (OI) summed up by the first counting means (21) during the last collection interval (T_{OI}).

**4.** The system as claimed in claim 1, wherein said decision means (30) is employing said load increase threshold (LIT) being smaller than 1,0 and equal to or larger than 0,0 and said load decrease threshold (LDT) being larger than said load increase threshold (LIT) and equal to or smaller than 1,0.

**5.** The system as claimed in claim 1, wherein the cell of interest (CI) is allowed to increase its own load if the guilty probability is smaller than the load increase threshold (LIT) and to decrease its own load if the guilty probability is larger than the load decrease threshold (LDT).

**6.** A base station for a cellular communication system, said base station using said system according to one of the preceding claims.

**7.** A cellular radio network using said system according to one of the claims 1 to 5.

**8.** A method for performing load control in at least one cell of interest (CI) of a cellular communication system, said method comprising:
- receiving for said cell of interest (CI) at least one overload indicator (OI) communicated by at least one neighbor cell (CN) to said cell of interest (CI), the overload indicator (OI) being a one bit information derived from a quantity that reflects a load in the neighbor cell (CN);
- calculating based on said received at least one overload indicator (OI) a probability that said cell of interest (CI) is guilty for an overload situation in said at least one neighbor cell (CN), and
- employing thresholds (LIT,LDT) for said probability each for load increase and for load decrease for deciding whether the cell of interest (CI) shall increase, hold or decrease its load.

**9.** The method as claimed in claim 8, wherein said method further comprises:
- Collecting for said cell of interest (CI) said at least one overload indicator (OI) during a predetermined overload indicator collection interval (T_{OI});
- Summing up for said cell of interest (CI) a total number (N) of overload indicator (OI) during said overload indicator collection interval (T_{OI});
- Accumulating for said cell of interest (CI) values (S) of the overload indicators (OI) during said overload indicator collection interval (T_{OI}), wherein
the guilty probability is calculated at the end of said overload indicator collection interval (TOI) based on the total number (N) and the accumulated value (S) of the overload indicators (OI).

**10.** The method as claimed in claim 9, wherein the guilty probability of the cell of interest (CI) is calculated as a ratio between the accumulated values (S) and the total number (N) of overload indicators (OI) summed up during the last collection interval (T_{OI}).

**11.** The method as claimed in claim 8, wherein said load increase threshold (LIT) is smaller than 1,0 and equal to or larger than 0,0 and said load decrease threshold (LDT) is larger than said load increase threshold (LIT) and equal to or smaller than 1,0.

**12.** The method as claimed in claim 8, wherein the cell of interest (CI) is allowed to increase its own load if the guilty probability is smaller than the load increase threshold (LIT) and to decrease its own load if the guilty probability is larger than the load decrease threshold value (LDT).

**13.** A computer program product comprising code means for performing the steps of the method as claimed in claim 8.
